Europäisches Patentamt

European Patent Office

Office européen des brevets

(19)

(11) **EP 1 091 447 A1**

(12) **EUROPEAN PATENT APPLICATION**

(43) Date of publication:
**11.04.2001 Bulletin 2001/15**

(51) Int Cl.⁷: **H01Q 3/26**, H01Q 1/24,
H04B 7/08

(21) Application number: **99119888.8**

(22) Date of filing: **07.10.1999**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **SIEMENS AKTIENGESELLSCHAFT
80333 München (DE)**

(72) Inventors:
• **Knudsen, Mikael B.**
**9260 Gistrup (DK)**
• **Vejlgaard, Benny**
**9220 Aalborg (DK)**
• **Pedersen, Gert Frolund**
**9280 Storvorde (DK)**

(54) **Antenna system, in particular for use in a mobile phone handset, and corresponding control method**

(57) This invention provides an antenna system, in particular for use in a mobile phone handset, comprising a first and second antenna (A1,A2); a combiner (40) for combining the output signals of said first and second antennas (A1,A2); a variable gain means (AS) for adjusting the gain of the output signal of the first antenna (A1) before being input into said combiner (40); a phase shifter (WS) for shifting the phase of the output signal of the first antenna (A1) before being input into said combiner (40); and a controlling means (10,20,30) for controlling said variable gain means (AS) and said phase shifter (WS) such that the output signal of said combiner (40) has optimized weights regarding said output signals of said first and second antenna (A1,A2) which maximize the output SINR. Moreover, a control method is proposed for controlling such an antenna system.

## FIG 1

EP 1 091 447 A1

**Description**

BACKGROUND OF THE INVENTION

The present invention relates to an antenna system, in particular for use in a mobile phone handset, and to a corresponding control method.

Although applicable to any mobile radio devices, the present invention and its underlying problems will be discussed with particular reference to GSM mobile phone systems.

Adaptive antennas for basestations have obtained great interest over the past few years and at present. Several manufacturers, operators and universities have and are performing field test to get more detailed information about the performance of such systems.

GSM field tests have shown a significant improvement of the uplink performance for both SNR (Signal to Noise ratio) and CIR (Carrier to Interference ratio) in both macro cell and micro cell applications. For the downlink significant improvements are observed for macro cell environments, but for micro cell environments only small gains in SNR and almost no CIR improvements are observed.

Genarally, it is well known that optimum combining can improve the signal-to-interference-plus-noise ratio (SINR) at the receiver significantly. With optimum combining an M element array can null up to M-2 interfering signals and still optimize desired signal reception as may be obtained from Winters, J. H.: Optimum Combining in Digital Mobile Radio with Co-channel Interference, IEEE Trans. Vehicular Technology, vol. VT-33, No 3, August 1984. True optimum combing requires at least two complete receiver chains and intensive computational power.

In Wong, P. B., Cox, D. C.: Low-Complexity Co-channel Interference Cancellation and Macroscopic Diversity for High-Capacity PCS, IEEE Trans. Vehicular Technology, vol. 47, No 1, February 1998; and in Wong, P. B., Cox, D. C.: Low-Complexity Co-channel Interference Cancellation and Macroscopic Diversity for High-Capacity PCS, IEEE CC'95, Seattle, June 19-22 1995, a low-complexity co-channel interference cancellation technique is presented for the Personal Access Communication Systems (PACS), which requires one receiver chain for each branch of diversity. The technique requires that it is possible to distinguish the desired signal from the interfering signal by introducing different pilot tones into different co-channel base stations or by allocating some bits in both downlink and uplink to distinguish signal from co-channel interference. Moreover, the combining is performed digitally in the baseband part, so at least two complete RF receivers are required.

In Wong, P. B., Cox, D. C.: Low-Complexity Diversity Combining Algorithms and Circuit Architectures for Co-Channel Interference Cancellation and Frequency-Selective Fading Mitigation, IEEE Trans. on Communications, vol. 44, No 9, February 1996, the algorithm for finding the optimum complex weight has been further optimised, so no extra training sequence or reference signals in the radio communication links are required in searching for the optimum complex weights, but a co-channel color code is required to identify the desired signal. The combining is still performed digitally in the baseband part.

In Zhang, C.N., Lam, W. K., Ling, C. L.: A Low-Complexity Antenna Diversity Receiver Suitable for TDMA Handset Implementation VTC Conference, 1997, a low-complexity antenna diversity receiver is presented for PACS, which only require a single RF receive, two voltage controlled RF attenuators, one voltage-controlled RF phase shifter, an RF signal combiner, an extra LNA and an extra antenna element compared to a standard PACS receiver. This receiver is capable for PACS to do selection diversity (SD), equal-gain-combining (EGC) and interference-reduction combining (IRC). The PACS downlink utilizes time division multiplex (TDM) transmission with no DTX or frequency hopping. As such, the antenna diversity receiver of this document uses the burst preceding the desired burst (other user) to measure the channel and set the combining diversity parameters (RF attenuator and phase shifter). The antenna system of this document will not work if the desired and interfering signals for other users are not always available in the bursts preceding the desired burst. Hence there is no signal available to estimated the channel. Moreover, if power control is used, estimating the channel based on preceding burst can be incorrect, due to that the power control setting can be different for the preceding burst and the desired burst. Note, the algorithm requires that the basestation transmits in all the timeslots.

A general problem is that network operators have only a limited number of channels at their disposal. This means that the capacity of the system must be optimised with a fixed number of channels. The capacity is limited by either the number of traffic channels or the interference from the neighbour cells.

Thus, what is needed is a low complexity pre-detection antenna system for use in a mobile phone handset which improves the downlink signal-to-interference-plus-noise-ratio (SINR).

SUMMARY OF THE INVENTION

The present invention provides an antenna system as defined in independent claim 1 and a corresponding control method as defined in claim 5.

The principal idea underlying the present invention is to provide two antenna branches to be combined, and to control at least one branch by a variable gain means and a phase shifter such that the combined output signal has optimized weights regarding said output signals of said first and second antenna.

A particular advantage of the invention is that a low-complexity antenna system is presented, which does not require that the desired and interfering signals for other channels are available in all bursts preceding the desired burst. The antenna system according to the invention will be able to either increase the capacity of the system or improve the quality of speech and data-transmission for a network, which is capacity limited by interference from neighbour cells. The complexity of the antenna system is low enough to be used in a mobile handset, but it is also suitable for low cost bases-stations.

In summary, comparing the antenna system with other known antenna systems for SINR enhancement, the identifiable advantages are listed as:

- The complexity of the antenna system is lower, which makes it suitable for a mobile handset. The antenna system is based on pre-detection, so it only requires a single receiver chain, an extra antenna element, one extra variable gain block, a 360 degrees phase shifter and a combiner.

- The accuracy of the phase shifter and gain block is not very critical.

- It can be implemented in a mobile handset at a low cost.

- The required extra build-in volume due to the antenna system is acceptable.

- The antenna system can be implemented without a pilot tone or some extra bits transmitted to distinguish the desired signal from the interfering signal.

- The antenna system do not require that the desired and interfering signals for other users are available all in the bursts preceding the desired burst.

Preferred embodiments of the present invention are listed in the dependent claims.

According to a preferred embodiment, said controlling means comprises a control loop between the output of said combiner and the control input of said variable gain means and said phase shifter.

According to a further preferred embodiment, said control loop comprises an RF front end means for performimg a down conversion of the output signal from the combiner, a baseband digital part for digitally processing the output signal of the RF front end means, and a weight generation part for generating the control signals for the variable gain means and the phase shifter according to the numerical calculations of the baseband digital part.

According to a further preferred embodiment, the baseband digital part includes a measuring means for measuring interference and noise for both antennas during an idle frame of a communication by switching between the two antennas during the idle frame.

BRIEF DESCRIPTION OF THE DRAWINGS

The present invention will become more fully understood by the following detailed description of preferred embodiments thereof in conjunction with the accompaying drawings, in which:

Fig. 1    an antenna system for use in a mobile phone handset as a first embodiment of the present invention;

Fig. 2    a flow chart of an exemplary possible tracking algorithm for the antenna system of Fig. 1;

Fig. 3    a flow chart of another exemplary possible trakking algorithm for the antenna system of Fig. 1; and

Fig. 4    results of the achieved SINR gain at the 10% level for the case with equal branch power for both antennas of Fig. 1.

DESCRIPTION OF THE PREFERRED EMBODIMENTS

In the figures, the same reference signs denote the same or functionally equivalent elements.

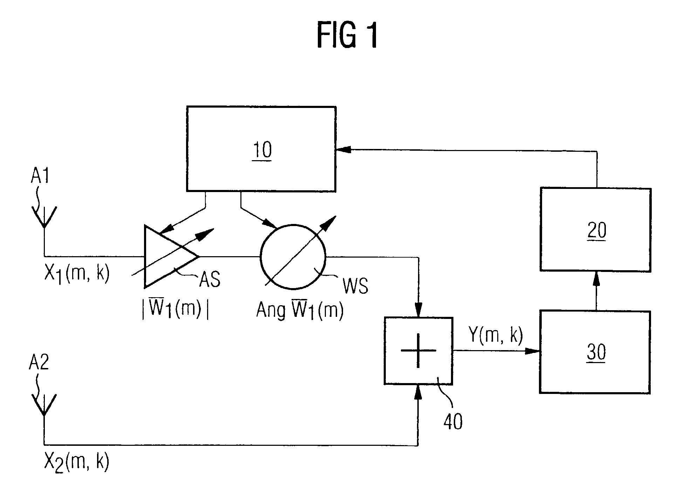

Fig. 1 shows an antenna system for use in a mobile phone handset as a first embodiment of the present invention.

In Fig. 1 reference sign Al, A2 denote a first and second antenna; AS a variable gain means; WS a phase shifter; 40 a combiner; 30 a RF front end; 20 a baseband digital part; 10 a weight generation part; $x_i(m,k)$ a received signal vector; $\tilde{w}_1(m)$ a normalized weight; and $y(m,k)$ a combined signal vector.

In Fig. 1., the antenna element consists of 2 antenna elements A1 and A2, where the amplitude and phase of the received signal from antenna A1 is altered prior to the RF combining in combiner 40 by use of the variable gain block AS and the phase shifter WS right after the antenna element A2. This antenna system is based on pre-detection, so it only requires a single receiver chain, an extra antenna element, one extra variable gain block, a phase shifter and a combiner in comparison to usual antenna systems.

The RF front end 30, the baseband digital part 20 and the weight generation part 10 constitute a controlling means for controlling said variable gain means (AS) and said phase shifter (WS) such that the output signal of said combiner (40) has optimized weights regarding said output signals of said first and second antenna (A1, A2).

In particular, the RF (Radio Frequency) front end 30 performes a down conversion of the signal $y(m,k)$ from the combiner 40. The baseband digital part 20 is a digital information processing part and includes a digital signal processor (DSP). The weight generation part 10 generates the control signals for the variable gain means AS and the phase shifter WS according to the numerical calculations of the DSP.

It has been found that the antenna system in Fig. 1 has the potential for a significant improvement of the SINR performance, particularly when used in an interference limited micro cell environment by a slow moving user.

The considered antenna system is intended for a handset implementation in a TDMA(Time Division Multiple Access) system, such as GSM (Global System Mobile), but not limited to GSM.

Specifically, a procedure for predicting the weights has been evaluated, which is suitable for a GSM handset implementation.

The evaluation was carried out in a typical GSM-1800 urban micro cell environment with the desired BS (Base Station) and IBS (Interfering Base Station) located outdoor and the mobile located indoor in office like environments.

The signal received by the handset will contain not only the desired signal, but also interfering signals and noise. For the two-antenna branch case which is shown in Fig. 1 the received signal vector $x(m,k)$ can be expressed as:

$$x(m,k) = \begin{bmatrix} x_1(m,k) \\ x_2(m,k) \end{bmatrix} = x_d(m,k) + x_n(m,k) + \sum_{j=1}^{L} x_j(m,k) \qquad (1)$$

where m represents the number of the GSM burst and k numbers the samples in the burst. $x_d(m,k)$, $x_n(m,k)$ and $x_j(m,k)$ are the received desired signal, noise and $j^{th}$ interfering signal vectors, respectively, and L is the number of interferes. Furthermore, let $S_d(m,k)$ and $S_j(m,k)$ be the desired and jth interfering signals, with

$$E\left[s_d^2(m,k)\right] = E\left[s_j^2(m,k)\right] = 1 \qquad (2)$$

$$\text{for } 1 \le j \le L$$

Then $x(m,k)$ can be expressed as

$$x(m,k) = u_d(m)s_d(m,k) + x_n(m,k) + \sum_{j=1}^{L} u_j(m)s_j(m,k) \qquad (3)$$

where $u_d(m)$ and $u_j(m)$ are the desired and $j^{th}$ interfering signal propagation vectors, respectively.

The received signal correlation matrix is given by

$$R_{xx}(m) = E\left[x(m,k)^* x(m,k)^T\right] \qquad (4)$$

Assuming the desired signal, noise and interfering signals are uncorrelated, $R_{xx}(m)$ is given by

$$R_{xx}(m) = u_d(m)^{\bullet} u_d(m)^T + \sigma^2 I + \sum_{j=1}^{L} u_j(m)^{\bullet} u_j(m)^T \qquad (5)$$

where $\sigma^2$ is the noise power and I is the identity matrix.

The equation for the weights that maximize the output SINR is known from Winters, J. H.: Signal Acquisition and Tracking with Adaptive Arrays in the Digital Mobile Radio System IS-54 with Flat Fading, IEEE Trans. Vehicular Technology, vol. 42, No 4, November 1993:

$$w(m) = R_{xx}(m)^{-1} u_d(m)^* \qquad (6)$$

Note that scaling of the weights by a constant does not change the output SINR. In the two-antenna branch case it is possible to scale the weights, so one weight always equal one.

$$w(m) = \frac{1}{w_2(m)} \begin{bmatrix} w_1(m) \\ w_2(m) \end{bmatrix} = \begin{bmatrix} \tilde{w}_1(m) \\ 1 \end{bmatrix} \qquad (7)$$

In GSM there is a 26 bit training sequence r in the center of every normal burst. For a two-receiver chain implementation in GSM the weights that maximize the output SINR can be obtained by

$$w(m) = R_{xx}(m)^{-1} r_{xd}(m)^* \qquad (8)$$

where the estimated receive signal correlation matrix is given by

$$\hat{R}_{xx}(m) = 1/K \sum_{j=1}^{K} x^{\bullet}(m,j) x^T(m,j) \qquad (9)$$

where K is the number of samples, and the estimated reference signal correlation vector is given by

$$\hat{r}_{xd}(m) = 1/K \sum_{j=1}^{K} x^{\bullet}(m,j) r(m,j) \qquad (10)$$

Using equation (8), (9) and (10) it is observed that no information about the interfering signal is required to calculate the optimum weights, but it is necessary to know the received signals, $x_1(m,k)$, $x_2(m,k)$, at the antennas to calculate $R_{xx}(m)$ and $r_{xr}(m)$.

In the investigated pre-detection antenna system the signal available for estimating the received signal at both antennas A1, A2 is

$$y(m,k) = w(m)^T x(m,k) \qquad (11)$$

If the following conditions are fulfilled the received signals $x_1(m,k)$, $x_2(m,k)$ can be obtained from the part of y(m,k), which contains the training sequence.

1. The channel is stable for at least the duration of two bursts

$$u_d(m) \approx u_d(m\text{-}1) \qquad\qquad (12)$$

$$u_j(m) \approx u_j(m\text{-}1) \qquad\qquad (13)$$

2. The transmitted sequence must be the same for both bursts

$$s_d(m,k) = s_d(m\text{-}1,k) \qquad\qquad (14)$$

$$s_j(m,k) = s_j(m\text{-}1,k) \qquad\qquad (15)$$

3. The weights must be different in two succeeding bursts

$$w(m) \neq w(m\text{-}1) \qquad\qquad (16)$$

Are all these conditions fulfilled then the received signals at the antennas can be estimated by

$$\hat{x}_1(m,k) = \frac{y(m-1,k) - y(m,k)}{\widetilde{w}_1(m-1) - \widetilde{w}_1(m)} \qquad\qquad (17)$$

$$\hat{x}_2(m,k) = y(m,k) - \hat{x}_1(m,k)\widetilde{w}_1(m) \qquad\qquad (18)$$

Considering a GSM-system with a slow moving user the channel for the wanted and the interfering signals will be stable.

For a synchronized GSM network the training sequence of the desired and interfering signal will overlap, and equation (14) and (15) will be fulfilled. However for a non-synchronized GSM network, which is most command, the interfering basestations transmits random data during the period where the desired basestation transmits the training sequence. Hence

$$s_j(m,k) \neq s_j(m\text{-}1,k) \qquad\qquad (19)$$

during the training sequence of the wanted signal and equation (15) will not be fulfilled.

For the non-synchronized GSM equation (5) and (6) can be used for calculating weights. Using equation (5) and (6) it is sufficient to estimate the noise power and the propagation vectors of the desired and interfering signals.

The propagation vectors at the output of the combiner 40 for the desired and interfering signals from y(m,k) may be estimated as follows. Assuming that the propagation vectors are at least constant for the duration of two bursts and the weights are changed, it is possible to calculate the propagation at the two antenna inputs $u_{i1}(m)$ and $u_{i2}(m)$ from the propagation vectors $u_{iy}(m)$, $u_{iy}(m\text{-}1)$ at the output of the combiner using

$$\hat{u}_{i1}(m) = \frac{u_{iy}(m-1) - u_{iy}(m)}{\widetilde{w}_1(m-1) - \widetilde{w}_1(m)} \qquad\qquad (20)$$

$$\hat{u}_{i2}(m) = u_{iy}(m) - \hat{u}_{i1}(m)\widetilde{w}_1(m) \qquad\qquad (21)$$

In GSM there is an idle frame for evey 26 TDMA frames, which can be used by the receiver to estimate noise power. Note that the weighted sum of the signals at the input antennas A1, A2 is used for the estimation of the noise.

The noise in the weighted sum is given by

$$y_n(m,k) = w(m)^T x_n(m,k) = \widetilde{w}_1 x_{n1}(m,k) + x_{n2}(m,k) \qquad (22)$$

where $x_{n1}(m,k)$, $x_{n2}(m,k)$ represent the independent noise at both antennas. Assuming that the noise power at antenna A1 and A2 is the same the power of $y_n(m,k)$ is

$$\sigma_y^2 = \left(\left|\widetilde{w}_1\right|^2 + 1\right)\sigma_n^2 \qquad (23)$$

and

$$\sigma_n^2 = \frac{\sigma_y^2}{\left(\left|\widetilde{w}_1\right|^2 + 1\right)} \qquad (24)$$

where $\sigma_n^2$ is the noise power at antenna A1 and A2.

The above algorithm for predicting the weights has been developed under the assumption that the GSM networks are non-synchronized, but it will work equally well for synchronized networks. Using equation (5), (6), (20), (21) and (24) the optimum weights can be calculated if there has been a change in the used weight set.

A speech frame in GSM is split out on 8 bursts by use of interleaving. Based on the assumption that it is acceptable to loose 1 out of 8 bursts in a speech frame the weights are changed to sub optimal weights for every 8th burst, so new optimum weights can be calculated.

Every time a sub optimal weight change is required it could be done by random, but investigating the measured data it has been observed that making a qualified guess in which direction the weight set should be changed gives a better performance. In order to do this it is necessary to calculate some additional parameters every time new weights are calculated.

These parameters are the quantization error $\varepsilon_\varphi$ of the argument of the normalized weight $\widetilde{w}_1$ and the change of the argument $\Delta_\varphi$ of the normalized weight $\widetilde{w}_1$. $\varepsilon_\varphi$ and $\Delta_\varphi$ are given by equations (24) and (25) where arg(x) stands for the argument of the complex number x and $\widetilde{w}_{q1}$ is the quantized equivalent of $\widetilde{w}_1$. $\widetilde{w}_{1p}$ is the normalized weight $\widetilde{w}_1$ which was calculated at the previous estimation.

$$\varepsilon_\varphi = \arg(\widetilde{w}_1) - \arg(\widetilde{w}_{q1}) \qquad (24)$$

$$\Delta_\varphi = \arg(\widetilde{w}_{1p}) - \arg(\widetilde{w}_1) \qquad (25)$$

With this information a better phase value for $\widetilde{w}_1$ could be guessed using the following rules:

$$\varepsilon\varphi + \Delta\varphi > 22,5^0 \qquad (26)$$

increase phase by 45°

$$|\varepsilon_\varphi + \Delta_\varphi| \le 22,5^0 \text{ no phase change} \qquad (27)$$

$$\varepsilon_\varphi + \Delta_\varphi < 22,5^0 \qquad (28)$$

decrease phase by 45°

Using these rules a better value for the phase is obtained with a probability higher than 70%.

If no phase change is desired the amplitude of $\tilde{w}_1$ is changed instead. The amplitude of $\tilde{w}_1$ will be decreased by one step if it is bigger than 1 and increased in the other case. Doing this the probability of improving the amplitude in the correct direction is about 64%.

This guessed weight is used only once because in the next burst a new estimation of the antenna signals can be done, which results in a new weight vector. Therefore the main goal is just to change the weights slightly in the correct direction.

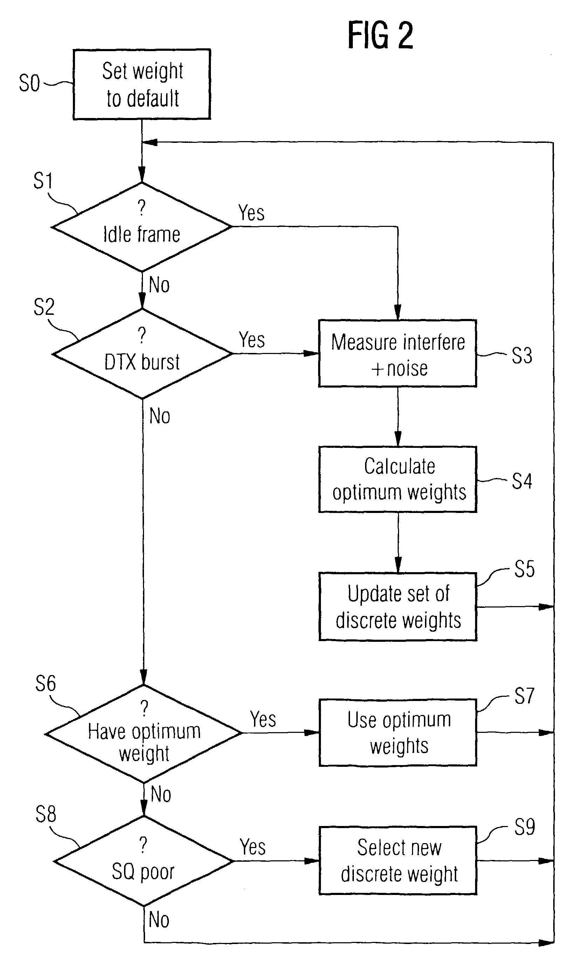

Fig. 2 shows a flow chart of an exemplary tracking algorithm for the antenna system of Fig. 1. The individual steps in the algorithm are explained below.

As already stated above, in GSM there is an idle frame every 26 TDMA frames, which can be used to measure noise plus interference. Here, the interference is measured for both antennas A1, A2 during the idle frame by switching between the two antennas A1, A2 during the idle frame.

To overcome the problem of having part of two different interfering bursts overlapping the desired burst for none synchronised base-stations, it is possible to sample both antennas A1, A2 with a very short interval compared to the burst length.

If the base-stations uses downlink DTX, the empty timeslots can be used for measuring noise plus interference as well.

In the procedure shown in figure 2, in step S0 the weights are set to predetermined default values. In step S1 and S2, respectively, it is checked, if there is an idle frame or a DTX burst. In step S3, the noise plus interference is estimated in every idle frame and DTX burst, i.e. YES in S1 or S2. Based on the estimated noise plus interference, in step S4 the optimum weights are calculated.

In step S5, the calculated weights are used in a moving average probability density function function, so as to create a discrete set of weights, where each weight has an equal likelihood (been used the same number of times) during the time length of the moving average window. Hence a dynamic set of weights is obtained.

In step S6, it is checked if there are calculated optimum weights. The calculated weights will be used in the succeeding timeslots, if this is true.

Otherwise, in step S8 it is checked, if the signal quality (SQ) is acceptable or not. If the signal quality is poor, a new weight setting will be selected by trial and error from a predetermined discrete set of weights in step 9.

Generally, in a GSM handset the signal quality (SQ) measure is obtained from a combination of the following:

- In a speech frame there is attached a Cyclic Redundancy Check (CRC) to the class la bits. The CRC check is updated every speech frame (20ms).

- From a soft-decision Viterbi decoder a metric is obtained for every speech frame, which is an identification of the probality that the decoded bits are correct (updated every 20ms).

- In an Enhanced Full Rate (EFR) speech decoder, there is a quality measure of the speech frame called Unreliable Frame Indicator (UFI), which can be used for received signal quality estimation.

- The RX-Qual measure that the handset reports to the base-station (updated every 480ms).

- The Bad Frame Indicator (BFI) that is calculated based on CRC and the metric from the Viterbi decoder (updated every 20ms).

- In every burst there is a training sequence, which the equalizer use to estimate the channel. If the received training sequence is equalised as well it will not be exactly the same as the ideal training sequence. The correlation between the ideal training sequence and the equalised received training sequence will give an estimate of the quality of the received signal. The quality is expected to be high if the correlation between the ideal training sequence and the equalised received training sequence is high (updated every 4.615ms).

- An interferer will have a training sequence, which has fairly good cross correlation properties with the training sequence from the desired signal. By making an auto correlation with the interference it is possible to identify the interfering signal. If the base-stations are not synchronised it is possible to identify the timing of the interfering signals in the idle frame and use that timing to identify the position of the interfering training sequence in the suchseeding bursts. (updated every 4.615ms)

- The BER of the training sequence can be obtained by comparing the received training sequence with the ideal training sequence (updated every 4.615ms).

- A soft Viterbi equalizer delivers a metric for every burst, which is an identification of the probability that the equalised bits are correct (updated every 4.615ms).

- In a speech frame there are 4 tail bits, which are all zeros. If the viterbi convolutional decoder has performed a correct decoding the tail bits should all be zero. If the tail bits are not all zero it is an indication of an incorrect decoding (updated every 20ms).

- A low RSSI is an indication of poor signal quality for a handset in a noise limited environment with no interference (updated every 4.615ms).

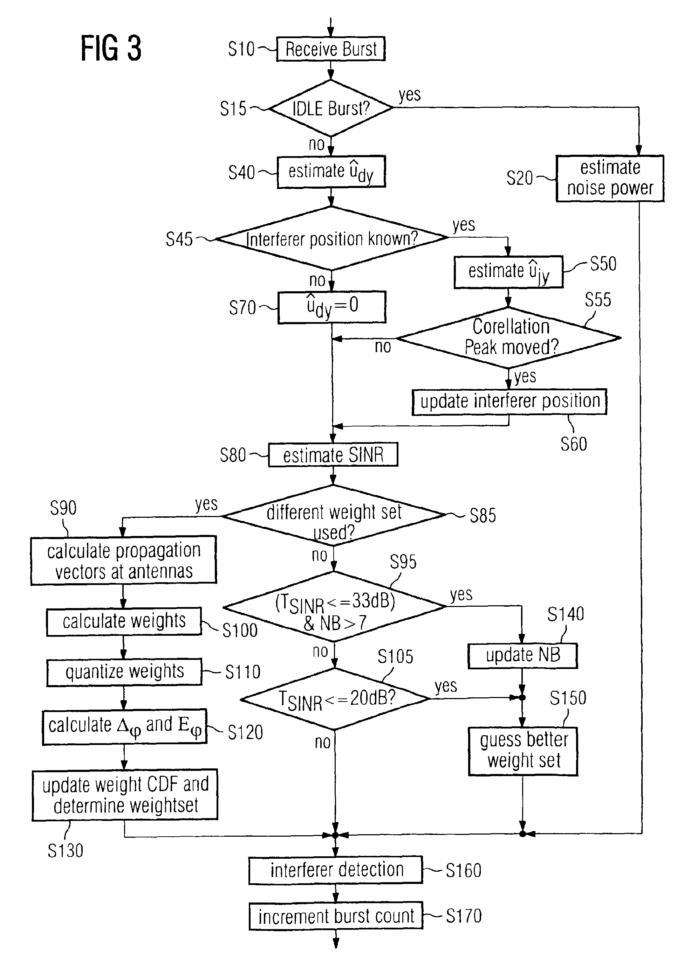

Fig. 3 shows a flow chart of another exemplary tracking algorithm for the antenna system of Fig. 1. The individual steps in the algorithm are explained below.

In step S10, the algorithm starts with the reception of a burst. In step S15, it is decided, if the received burst is an idle burst. If the received burst is an idle burst, then the noise power, $\hat{\sigma}^2$, is estimated in step S20.

In step S30, if the received burst is a normal burst, then the propagation vector of the wanted signal, $\hat{u}_{dy}(m)$, after the combiner 40 is estimated.

In step S45, it is decided, if the position of an interfering training signal is known. If the position of an interfering training signal is known, then the propagation vector of the interfering signal, $u_{jy}$, after the combiner 40 is estimated in step S50.

In step S55, it is decided, if the position of the correlation peak has moved. In step S60, the position of the interfering training sequence will be updated, if the position of the correlation peak has moved, and thereafter the procedure proceeds to S80. Otherwise the procedure immediately proceeds to S80.

If in step S45 the position of the interfering training sequence is not known, then the estimated propagation vector of the interfering signal is set to 0 in step S70.

In step S80, the SINR is estimated using the estimated propagation vector of the wanted signal $\hat{u}_{dy}(m)$, the estimated propagation vector of the interfering signal $\hat{u}_{iy}(m)$ and the estimated noise power $\hat{\sigma}^2$.

$$SINR = 10\log_{10}\left(\frac{\left|\hat{u}_{dy}(m)\right|^2}{\hat{\sigma}^2 + \left|\hat{u}_{iy}(m)\right|^2}\right) \qquad [dB] \qquad (29)$$

In step S85, it is decided, if the weights used in the current burst are different from the weights used in the previous burst.

If the weights used in the current burst are different from the weights used in the previous burst, then the propagation vectors at both antennas are estimated using equation (21) and (22) in step S90. In step S100, the new weights are then calculated using equations (5) and (6). In steps S110 and S120, the weights are quantized and the quantization error of the argument $\varepsilon_\varphi$ and the change of the argument $\Delta_\varphi$ are calculated. In the quantization 8 amplitude steps and 8 phase steps are used. The phase steps are uniformly distributed with steps of 45°. The quantisation of the amplitude steps are based on a CDF (Cumulative Distribution Function) of the last 1000 calculated $\tilde{w}_1$ in such a way that each amplitude step is used with equal probability. In step S130, the weight CDF and the weight set is updated.

If in step S85 the same weights are used as in the previous burst, then better weights are guessed in step S150, only if the trend of the SINR $T_{SINR}$ falls below 20 dB (step S105) or the trend of the SINR $T_{SINR}$ falls below 33dB and this condition was not fulfilled in the last 7 bursts, i.e. burst count NB > 7, (step S95 and step S140). The trend of the SINR is given by

$$T_{SINR} = 2 \cdot SINR(m) - SINR(m-1) \qquad (30)$$

where SINR(m) and SINR(m-1) are the estimated SINR at the current burst and the previous burst, respectively. The threshold levels 20dB and 33dB are a result of optimizing the algorithm.

In step S160, a search for a new interferer is made. If an interfering training sequence is found on a new position and this interfere is stronger than the interfere, which has been found in the previous bursts, then it is determined, which training sequence the interfering base station uses. Correlating the new interfering training sequence with all the GSM specified training sequences (except the training sequence used by the wanted base station) identifies it. In step S170, the burst counter is incremented by one.

Test measurements were carried out at 1890 MHz using a mock-up handset. The handset is a commercially available GSM-1800 handheld equipped with a retractable whip and a helical antenna, which is modified to also include a back mounted patch antenna.

Two 50 ohms cables were used to connect the antennas to the receiving equipment. The mock-up consists therefore of three antennas connected to two connectors, a patch antenna on one connector and either the whip or the normal mode helical (when not retracted) on the other connector. Measurements are performed both in free space and in the presence of a user. The measurements with a user were carried out by having a test person holding the handheld in a natural speaking position. Then the person followed a path marked by tape on the floor. The path was a square of some 2 by 4 meters and each record of data lasts 30 seconds corresponding to approximately 8 rounds. To record all three antennas the person had to follow the path for 30 seconds, change from the whip antenna to the helix and walk the path once again. Hence, firstly record the whip antenna and the patch and next to record the helix antenna and the patch once again. The free space measurements were recorded the same way as with a person present except that the handheld was mounted on a wooden stick with a 60 degrees tilt angle from vertical.

Altogether four locations were selected, one path on each floor. The windows on level 3, level 2, and the ground level were facing towards the transmitter but there was no line of sight due to higher buildings inbetween. On the first floor, the windows were facing opposite the transmitter.

The free space measurements were repeated three times on each floor. The measurements with a person present were repeated five times for two persons holding the handheld in both the right and the left hand using the whip-patch and then the helix-patch antenna. These measurements are only carried out on the first floor.

In this measurement campaign, only one base station location has been used, so this basestation will transmit both the wanted and interfering signal. In a real network, the wanted and interfering signal are not transmitted from the same location. Placing the the wanted and interfering basestation at the same location is expected to be a worst case situation.

In each SINR investigation, one measurement has been used as the wanted signal and one of the repeated measurements has been used as the interfering signal.

The handset was connected to a wideband dual channel correlation sounder in order to record two antennas at a time.

The carrier frequency was 1890 MHz and a bandwidth of 20 MHz was used. Measuring in this large bandwidth makes it possible to filter out the bandwidth of interest, e.g. 200 kHz for GSM. The instantaneous dynamic range of the sounder was 45 dB and the over all dynamic range is 80 dB with a linearity of $\pm$1dB.

To match a typical urban GSM microcell, the transmitter antenna was located approximately 700 m away on the sixteenth level of a high building in an urban environment. The transmit antenna was a 60 degrees sector antenna with a beamwidth of 5 degrees in elevation and it was tilted mechanically some 4 degrees down. No line of sight existed between the transmitter and the handheld phone.

Each recorded path lasts 30 seconds and consists of 1000 impulse responses for all channels, and each impulse response has a depth of 6 microseconds. The back-to-back measurements of the measuring equipment were used in equalizing the gain difference between the two channels of the sounder (0.3 dB $\pm$0.5 dB).

The coherence bandwidth of the received signal is approximately 2MHz (for a correlation value of 0.7). Therefore it is assumed that a GSM channel having 200kHz of RF bandwidth can be considered flat fading.

The noise power was estimated and removed from each impulse response, and the measured impulse response were converted to the frequency domain by a fast fourier transform (FFT). The frequency resolution is approximately 200 kHz, which match the RF bandwidth of one GSM channel. A single frequency component in the FFT spectrum has been used to represent the GSM channel, which corresponds to a flat fading channel.

The investigation of the possible SINR gain by use of the tracking algorithm in Fig. 3 for the antenna system in Fig. 1 has been performed with the measured channel data.

The investigated antenna system is intended for the GSM system, which is capacity limited by interference from the neighbor cells. In GSM it is generally considered that when the interference level is 9 dB below the signal level, the channel and speech coding makes the speech quality good enough. It is normally expected that if no more than 10% of the CIR values are below 9 dB, we have an acceptable system performance.

The SINR gain is evaluated at the 10% level as the difference, in dB, between the antenna with the best average SINR and the combined signal.

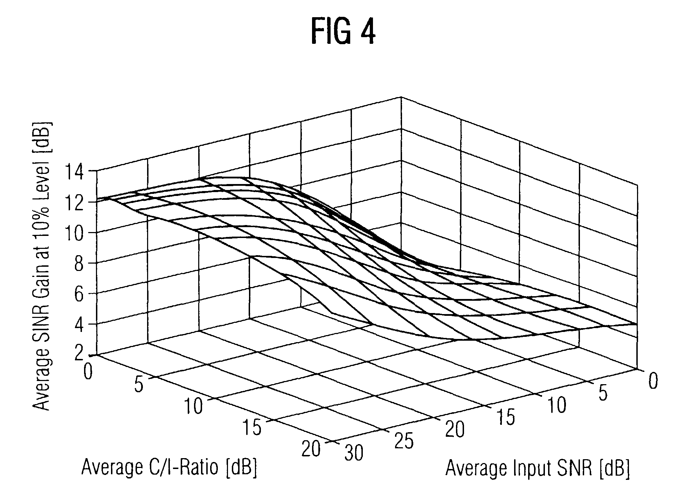

Fig. 4 show results of the achieved average SINR gain (dB) at the 10% level for the case with equal branch power for both antennas. The obtained SINR gain at the 10% level is shown as a function of average input C/I-Ratio (dB) and average input SNR (dB).

It is observed that the SINR gain at the 10% level increases with increasing Interference to noise ratio (INR), which is in agreement with results obtained with two receiver branch optimum combining. For high INR (high SNR) the SINR gain at the 10% level is more than 10 dB.

Thus, a powerful algorithm for predicting the weights in a single receiver antenna system has been proposed and evaluated for a GSM handset implementation.

Although the present invention has been described with respect to preferred embodiments thereof, it should be understood that many modifications can be performed without departing from the scope of the invention as defined by the appended claims.

In particular, the above algorithm is developed for non-synchronized networks, but it will work equally well for synchronized networks.

Moreover, more than two antennas could be used.

Although the considered antenna system is intended for a handset implementation in a TDMA(Time Division Multiple Access) system, such as GSM (Global System Mobile), it is not limited to GSM.

### Claims

1. An antenna system, in particular for use in a mobile phone handset, comprising:

   a first and second antenna (A1, A2);

   a combiner (40) for combining the output signals of said first and second antennas (A1, A2);

   a variable gain means (AS) for adjusting the gain of the output signal of the first antenna (A1) before being input into said combiner (40);

   a phase shifter (WS) for shifting the phase of the output signal of the first antenna (A1) before being input into said combiner (40); and

   a controlling means (10, 20, 30) for controlling said variable gain means (AS) and said phase shifter (WS) such that the output signal of said combiner (40) has optimized weights regarding said output signals of said first and second antenna (A1, A2) which maximize the output SINR.

2. The antenna system according to claim 1, wherein said controlling means (10, 20, 30) comprises a control loop between the output of said combiner (40) and the control input of said variable gain means (AS) and said phase shifter (WS).

3. The antenna system according to claim 1, wherein said control loop comprises an RF front end means (30) for performimg a down conversion of the output signal from the combiner (40), a baseband digital part (20) for digitally processing the output signal of the RF front end means (30), and a weight generation part (10) for generating the control signals for the variable gain means (AS) and the phase shifter (WS) according to the numerical calculations of the baseband digital part (20).

4. The antenna system according to claim 3, wherein the baseband digital part includes a measuring means for measuring interference and noise for both antennas (A1, A2) during an idle frame of a communication by switching between the two antennas (A1, A2) during the idle frame.

5. A control method for controlling the antenna system according to at least one of the preceeding claims comprising the steps of:

   setting the weights to predetermined default values;

   estimating the noise plus interference every predetermined frame, preferably in an idle frame or a DTX burst; and

   calculating optimum weights based on the estimated noise plus interference.

6. The method according to claim 5, characterised by the steps of:
   using the calculated weights in a moving average probability density function function, so as to create a discrete set of weights, where each weight has an equal likelihood (been used the same number of times) during the time length of the moving average window.

**7.** The method according to claim 5 or 6, characterised by the steps of:

if there are no calculated optimum weights available, checking, if the signal quality is acceptable or not; and

if the signal quality is poor, selecting a new weight setting will be selected by trial and error from a predetermined discrete set of weights, otherwise using said predetermined default values.

# FIG 1

A1

$X_1(m, k)$

AS

$|\overline{W}_1(m)|$

WS

Ang $\overline{W}_1(m)$

10

20

30

40

$Y(m, k)$

A2

$X_2(m, k)$

# FIG 2

S0 — Set weight to default

S1 — ? Idle frame

No

S2 — ? DTX burst — Yes → Measure interfere + noise — S3

No

Calculate optimum weights — S4

Update set of discrete weights — S5

S6 — ? Have optimum weight — Yes → Use optimum weights — S7

No

S8 — ? SQ poor — Yes → Select new discrete weight — S9

No

# FIG 3

S10 — Receive Burst

S15 — IDLE Burst? —yes→

no ↓

S40 — estimate $\hat{u}_{dy}$

S20 — estimate noise power

S45 — Interferer position known? —yes→

S50 — estimate $\hat{u}_{jy}$

no ↓

S70 — $\hat{u}_{dy}=0$

S55 — Corellation Peak moved?

no →

yes ↓

update interferer position — S60

S80 — estimate SINR

S85 — different weight set used?

S90 —yes→ calculate propagation vectors at antennas

no ↓

S95 — ($T_{SINR}<=33dB$) & NB>7 —yes→ update NB — S140

S100 — calculate weights

no ↓

S110 — quantize weights

S105 — $T_{SINR}<=20dB$? —yes→

S120 — calculate $\Delta_\varphi$ and $E_\varphi$

S150 — guess better weight set

S130 — update weight CDF and determine weightset

no ↓

interferer detection — S160

increment burst count — S170

# FIG 4

European Patent Office

**EUROPEAN SEARCH REPORT**

Application Number

EP 99 11 9888

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHAN P W C ET AL: "Low-complexity antenna diversity receivers for WCDMA handsets" , 1999 IEEE 49TH VEHICULAR TECHNOLOGY CONFERENCE (CAT. NO.99CH36363), 1999 IEEE 49TH VEHICULAR TECHNOLOGY CONFERENCE. MOVING INTO A NEW MILLENIUM, HOUSTON, TX, USA, 16-20 MAY 1999 , 1999, PISCATAWAY, NJ, USA, IEEE, USA, PAGE(S) 1901 - 1905 VOL.3 XP002127920ISBN: 0-7803-5565-2 * abstract; figure 1 * * page 1901 - page 1902 * | 1,5 | H01Q3/26 H01Q1/24 H04B7/08 |
| X,D | WONG P B ET AL: "LOW-COMPLEXITY COCHANNEL INTERFERENCE CANCELLATION AND MACROSCOPIC DIVERSITY FOR HIGH-CAPACITY PCS" IEEE TRANSACTIONS ON VEHICULAR TECHNOLOGY,US,IEEE INC. NEW YORK, vol. 47, no. 1, page 124-131 XP000773943 ISSN: 0018-9545 * abstract; figures 1,5; table 1 * | 1,5 | |
| X,D | P BILL WONG ET AL: "LOW-COMPLECITY CO-CHANNEL INTERFERENCE CANCELLATION AND MACROSCOPICDIVERSITY FOR HIGH CAPACITY PCS*" , PROCEEDINGS OF THE CONFERENCE ON COMMUNICATIONS (ICC),US,NEW YORK, IEEE, PAGE(S) 852-857 XP000533123ISBN: 0-7803-2487-0 * abstract; figures 1,5; table 1 * -/-- | 1,5 | **TECHNICAL FIELDS SEARCHED (Int.Cl.7)** H01Q H04B |

The present search report has been drawn up for all claims

| Place of search | Date of completion of the search | Examiner |
|---|---|---|
| MUNICH | 18 January 2000 | Felgel-Farnholz, W-D |

EPO FORM 1503 03.82 (P04C01)

**European Patent Office**

## EUROPEAN SEARCH REPORT

Application Number

EP 99 11 9888

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | WONG P B ET AL: "Low-complexity diversity combining algorithms and circuit architectures for co-channel interference cancellation and frequency-selective fading mitigation" IEEE TRANSACTIONS ON COMMUNICATIONS, SEPT. 1996, IEEE, USA, vol. 44, no. 9, pages 1107-1116, XP002127919 ISSN: 0090-6778 * abstract; figures 1,4-6 * | 1,5 | |
| A,D | ZHANG C -N ET AL: "A LOW-COMPLEXITY ANTENNA DIVERSITY RECEIVER SUITABLE FOR TDMA HANDSET IMPLEMENTATION" , IEEE VEHICULAR TECHNOLOGY CONFERENCE,US,NEW YORK, IEEE, VOL. CONF. 47, PAGE(S) 1753-1757 XP000738664ISBN: 0-7803-3660-7 * abstract; figures 1,3; table II * | 1,5 | |
| A,D | WINTERS J H: "Optimum combining in digital mobile radio with cochannel interference" IEEE TRANSACTIONS ON VEHICULAR TECHNOLOGY,US,IEEE INC. NEW YORK, vol. 47, no. 3, August 1984 (1984-08), pages 144-155, XP002127911 ISSN: 0018-9545 * abstract; figure 1 * | 1,5 | TECHNICAL FIELDS SEARCHED (Int.Cl.7) |
| A | WO 98 23101 A (SHTROM VICTOR ;FROST OTIS L (US); ARGO SYSTEMS INC (US); HOGENAUER) 28 May 1998 (1998-05-28) * abstract; figure 8 * | 1,5 | |

The present search report has been drawn up for all claims

| Place of search | Date of completion of the search | Examiner |
|---|---|---|
| MUNICH | 18 January 2000 | Felgel-Farnholz, W-D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 091 447 A1

**ANNEX TO THE EUROPEAN SEARCH REPORT
ON EUROPEAN PATENT APPLICATION NO.**

EP 99 11 9888

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2000

| Patent document cited in search report | Publication date | Patent family member(s) | Publication date |
|---|---|---|---|
| WO 9823101 A | 28-05-1998 | AU 5442998 A | 10-06-1998 |

EPO FORM P0459

For more details about this annex : see Official Journal of the European Patent Office, No. 12/82

19